Europäisches Patentamt

European Patent Office

Office européen des brevets

(19)

(11) Publication number: 0 167 262
A2

(12) EUROPEAN PATENT APPLICATION

(21) Application number: 85303675.4

(22) Date of filing: 24.05.85

(51) Int. Cl.⁴: G 01 K 1/08

(30) Priority: 29.06.84 JP 134910/84

(43) Date of publication of application:
08.01.86 Bulletin 86/2

(84) Designated Contracting States:
DE FR GB IT

(71) Applicant: KUREHA KAGAKU KOGYO KABUSHIKI KAISHA
9-11 Horidome-cho 1-chome Nihonbashi Chuo-ku Tokyo(JP)

(72) Inventor: Sogawa, Akira
Dai-Ni Kureha-Soh 3-10-12 Nerima
Nerima-ku Tokyo(JP)

(72) Inventor: Shirakami, Toshiharu
No 402 Ohmori-Haitsu 5-3-4 Hinodai
Hino-shi Tokyo(JP)

(72) Inventor: Kawai, Yoshio
3-12-10 Kichijoji-Higashicho
Musashino-shi Tokyo(JP)

(72) Inventor: Kai, Hidenobu
No 201, 6-14-5 Befu Jonan-ku
Fukuoka-shi Fukuoka-ken(JP)

(72) Inventor: Matsufuji, Hidemasa
No 31-1102 Danchi 3-36 Hakozaki Higashi-ku
Fukuoka-shi Fukuoka-ken(JP)

(74) Representative: Senior, Alan Murray et al,
J.A. KEMP & CO 14 South Square Gray's Inn
London WC1R 5EU(GB)

(54) Indwelling thermosensor.

(57) An indwelling thermosensor in which a protection tube is so constituted that a wire member joined to the protection tube is not displaced from the joined position.

Fig. 1

EP 0 167 262 A2

-1-

## "INDWELLING THERMOSENSOR"

This invention relates to an indwelling thermosensor which can be reliably retained at a desired position outside or inside a living tissue for measuring the temperature, and can measure the temperature at that position accurately over a long period of time.

As a thermosensor for medical use, a fluoro resin tube thermocouple comprising a thermocouple made of alumel-chromel or the like protected in a tube made of fluoro resin has been known. Since thermosensors of this type are flexible, even when the part of a body to be measured for temperature is situated deep inside a narrow canal, the thermosensitive element can be inserted with ease and the thermosensor can be easily placed to the desired position. However, since the tube is made of hard and slippy resin material, it tends to be detached from the part to be measured. Then, even if the tube is secured by means of threads or the like, it will readily displace or slip, to bring about difficulty in reliable temperature measurement of the body part concerned.

The aim of this invention is to provide an indwelling thermosensor capable of accurate measurement of the temperature at a desired position without movement therefrom.

According to the present invention, there is provided an indwelling thermosensor comprising a temperature detection element and a protection tube for protecting said temperature detection element, characterized in that the protection tube includes means by which a retaining wire or thread member may be joined to the protection tube at a joining position without moving from the joining position in order to secure a particular portion of the protection tube at a desired position, said temperature detection element being disposed inside said portion of the protection tube.

In one embodiment said means comprises a through hole extending through the protection tube and capable of freely receiving the wire or thread.

In another embodiment said means comprises a recess formed on the protection tube.

In another embodiment said means comprises an elastic surface, on the protection tube, which is capable of deforming to form a recess upon tightening of the wire or thread.

In order that the invention may be more clearly understood, the following description is given by way of example only with reference to the accompanying drawings, in which:

Figure 1 is a plan view of a thermosensor having an aperture at the top end thereof according to this invention,

Figure 2 is a side elevational view of the thermosensor having the aperture at the top end thereof according to this invention,

Figure 3 is a plan view of a thermosensor having a slit disposed at the top end, and

Figure 4 is a plan view of a thermosensor having a pinched portion formed on a tube according to this invention.

The indwelling thermosensor according to this invention is applicable to temperature measurement for various purposes and, particularly, it is extremely suitable as a thermosensor for use in the hyperthermia therapy of cancers which is intended accurately to measure the temperature at a lesion outside or deep inside living tissue for improving the therapeutical effect. In the hyperthermia therapy of cancers, the method of using, for instance, electromagnetic waves to warm the living tissue utilizes the generation of heat when electromagnetic waves entering the living tissue are absorbed in all parts thereof. It is essential in this case accurately to measure the temperature at each of the parts of the living tissue, to control and review the therapeutical treatment and the operation of equipment.

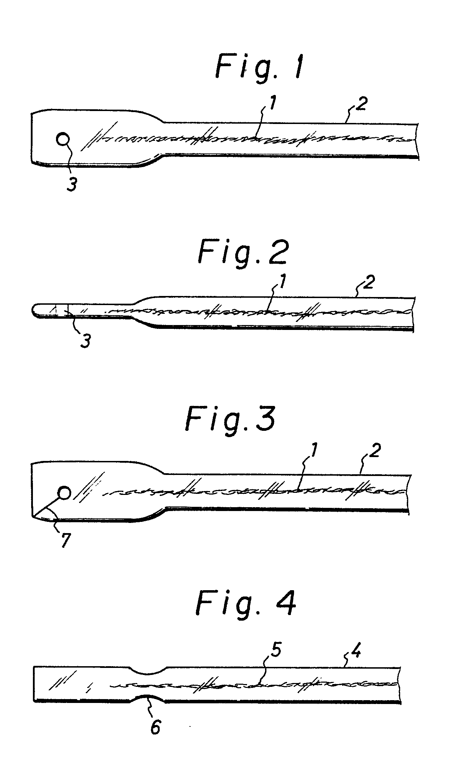

Figures 1 and 2 show a first embodiment of indwelling thermosensor according to this invention. Referring to Figures 1 and 2, a thermocouple 1 is disposed within a generally cylindrical tube 2 made of fluoro resin. In this embodiment, the cylindrical tube 2 is deformed at its left end to have a flat configuration as shown in the drawings. The tube 2 is formed with an aperture 3 in the flattened part. Were the tube formed with an aperture without being flattened, a body fluid or the like might enter the tube 2 through the aperture 3. The tube end is therefore sealed, as above, for preventing this. Further, the forming into a flat shape has the merit of facilitating the formation of the aperture 3 and also easy passage of a wiring member, for example, a thread, passed through the aperture 3. The size for the flat portion may be selected depending on the diameter of the aperture 3 and the outer diameter of the tube 2. The flat portion is fabricated by heat sealing the top end of the tube 2 and, at the same time, crushing it between flat plates into a flat shape as described above and then forming an aperture at the flattened portion. The size of the aperture 3 may optionally be selected depending on the outer diameter and the wall thickness of the tube 2 and it ranges usually from 0.5 mm to 3 mm and, preferably, from 1 to 2 mm for cases where the tube is to be fixed by a thread. One of the ends of the thermocouple is connected to a temperature indicator by way of a connector or the like. On using the indwelling thermosensor of this embodiment, the thermosensitive portion is secured, for instance, by a surgical operation, to the outer wall of the oesophagus and held in position by the thread passing through the hole 3 while a lead wire continuous with the thermosensitive portion is exposed through the armpit to the surface of the body. Then, after fixing the lead wire to the body surface by means of a known method such as adhesive tapes or the like, the lead wire is connected to a temperature indicator for temperature measurement every time hyperthermia therapy is applied.

For easier binding of a previously looped thread to the aperture 3, a slit 7 which connects the aperture 3 and the outside of the indwelling sensor may further be provided as shown in Figure 3.

Figure 4 shows a second embodiment according to this invention. Referring to the Figure, a narrowed portion 6 is formed at the left end of a tube 4. The portion 6 is formed such that its diameter is smaller than the diameter of the adjacent portions of the heat shrinking fluoro resin tube. The tube can be made for instance by inserting round bars each with 2 mm outer diameter and 10 mm length into a heat shrinking fluoro resin tube with 2.5 mm outer diameter while keeping the end of the rods 3 mm apart from each other and then heating them to form the pinched portion 6 as shown in Figure 4. The outer diameter at the pinched portion is 1.8 mm. Then, a high resistance reed thermistor 5 is embedded in the tube, which is a protection tube, to complete the thermosensor. In the actual use, the thermosensor is fixed by binding the pinched portion with a thread which is then secured to the body. Since the fluoro resin is hard and the thread or wire member does not bite into the tube surface, there may occasionally be a clearance in the recessed portion which allows a slight displacement, but the thread does not slip away from the recess.

In a third embodiment, the protection tube is entirely or partially made of rubbery elastic material, for example, a silicone rubber. An engaging portion may be prepared by binding the tube with a stitching thread. In order to secure the tube completely, the rubbery elastic material requires a thickness of more than 0.3 mm. Further, in order to prevent the protecting tube from elongation under the external forces, which leads to the displacement of the temperature measuring position, it is preferred to have an inextensible fibre material, for example, glass fibres, carbon fibres or the like passing through the inside of the tube along the lead wire in the protection tube, and to bond the fibres to the protection tube for preventing it elongating. For instance, an indwelling thermosensor according to this invention can be prepared by passing a linear thermocouple of 0.1 mm diameter appended longitudinally with carbon fibres having, for example, 10 000 strands of filaments while applying a coating of silicone adhesives through a silicone tube of 2 mm outer diameter and 1 mm inner diameter. When the thermosensor is tied at a position 10 mm from the top end with surgical threads and 500 g of force is applied, the positional displacement is less than 0.5 mm.

Furthermore, an insulation powder such as MgO may be used to fill the protection tube and the top end may be

0167262

-7-

exposed.

It should be noted that the aforementioned embodiments are only preferred examples for illustrating this invention and the invention is in no way limited only thereto. For example, the pinched portion 6 need not necessarily be formed only at one portion. A bellows-like engagement involving several pinched portions may be employed. Further, the shape of the pinched portions and the size of the aperture may be modified depending on the purposes or the application uses.

As the temperature detecting element, a platinum or other resistor member or a thermistor that utilizes the change in the electrical resistance, or an alumel-chromel thermocouple utilizing the thermoelectromotive force is preferred. Although various materials can be used for the protection tube according to this invention, fluoro resin, silicon resin or the like, which are harmless when the tube is caused to stay inside living tissue, are preferred.

While the protection tube has an engaging portion retained with respect to the living tissue by means of a thread or wire member, for example a stitching thread, there is no particular restriction on the shape and the material of the thread employed. In the case of using the present thermosensor for temperature measurement deep inside living tissue, stitching threads mainly composed of collagen, polyvinyl alcohol or the like are preferably used.

-8-

The engaging portion is provided at at least one position at the top end or any other desired part of the tube. The configuration may, for instance, be an aperture, narrowing, or bellows.

As described above, in an indwelling thermosensor comprising a temperature detecting element and a protection tube for protecting the temperature detecting element the protection tube is so constituted that, even if a part for measuring the temperature is situated deep inside a living body, a thread or wire member joined to the protection tube for securing the part of the protection tube where the temperature detection element is disposed to a desired position is not displaced from the protection tube. Insertion of the thermosensor, setting thereof to the desired position for measuring the temperature, and securing of the tube wall at the desired position can be carried out with ease, whereby the temperature at the desired position can be detected reliably.

-9-

# C L A I M S

1. An indwelling thermosensor comprising a temperature detection element (1, 5) and a protection tube (2, 4) for protecting said temperature detection element, characterized in that the protection tube (2, 4) includes means (3, 6) by which a retaining wire or thread member may be joined to the protection tube at a joining position without moving from the joining position in order to secure a particular portion of the protection tube at a desired position, said temperature detection element (1, 5) being disposed inside said portion of the protection tube.

2. An indwelling thermosensor according to claim 1, characterised in that said means comprises a through hole (3) extending through the protection tube (2) and capable of freely receiving the wire or thread.

3. An indwelling thermosensor according to claim 2, characterised by a slit (7) in communication with the hole (3) for facilitating the insertion of the wire or thread into the hole.

4. An indwelling thermosensor according to claim 1, characterised in that said means comprises a recess (6) formed on the protection tube (4).

5. An indwelling thermosensor according to claim 1, characterised in that said means comprises an elastic surface, on the protection tube (4), which is capable of deforming to form a recess upon tightening of the wire or thread.

6. An indwelling thermosensor according to claim 5, characterised by reinforcing, low extensibility, fibres within the protection tube.

7. An indwelling thermosensor according to any preceding claim, characterised in that the temperature detection element (1, 5) comprises a high resistance reed thermistor, a platinum resistor wire or an alumel-chromel thermocouple.

8. An indwelling thermosensor according to any preceding claim, characterised in that the protection tube (2, 4) is made of fluoro resin, or is at least partially made of a silicone rubber tube.

9. An indwelling thermosensor according to any preceding claim, combined with a thread or wire which comprises a stitching thread mainly composed of collagen for securing the thermosensor in position.

10. An indwelling thermosensor according to any one of claims 1 to 8 combined with a thread or wire member which comprises a stitching thread mainly composed of polyvinyl alcohol for securing the thermosensor in position.

*Fig. 1*

*Fig. 2*

*Fig. 3*

*Fig. 4*